# EUROPEAN PATENT SPECIFICATION

(11) **EP 3 715 588 B1**
(45) Date of publication and mention of the grant of the patent: **19.01.2022**
(21) Application number: 19209721.0
(22) Date of filing: 18.11.2019
(51) Int. Cl.: F01D 21/04, F01D 25/24

(54) **TURBINE CONTAINMENT ARRANGEMENT**
TURBINENBERSTSCHUTZORDNUNG
AGENCEMENT DE CONFINEMENT DE TURBINE

(30) Priority: 26.03.2019 US 201916365125
(43) Date of publication of application: 30.09.2020
(73) Proprietor: Hamilton Sundstrand Corporation, Charlotte, NC 28217-4578 (US)
(72) Inventor: SLAYTER, Matthew, Rockford, IL Illinois 61114 (US); MCMASTERS, Brian, Caledonia, IL Illinois 61011 (US)
(74) Representative: Dehns

(56) References cited:
- GB-A- 2 375 798
- US-A- 4 547 122
- US-A1- 2014 064 938
- US-B1- 6 182 531

## Description

### BACKGROUND

The present disclosure relates generally to a turbine casing. More particularly, the present disclosure relates to ballistic structures of a turbine casing for a starter.

Structures designed for dealing with ballistic events, such as high energy debris released from a damaged turbine wheel, are typically constrained by the mechanical properties of the materials used in the structures. In such an event, the released particle must be contained so as not to puncture through the turbine outer case. In addition, after a failure event the turbine case must retain its structural integrity while the engine shuts down in order to prevent further potentially catastrophic damage. Despite these significant ballistic requirements on the turbine case, the turbine case contributes to the overall weight of the engine. Among the many challenges faced by a person of skill in the art is how to balance the ballistic requirements of the turbine case with the competing weight constraint. Turbine casings are disclosed in GB 237 5798, US 4, 547,122, US 2014/064938 and US 6, 182, 531.

### SUMMARY

A turbine containment arrangement is provided as defined by claim 1.

A method of forming a casing for a turbine containment arrangement is provided as defined by claim 6.

The present summary is provided only by way of example, and not limitation. Other aspects of the present disclosure will be appreciated in view of the entirety of the present disclosure, including the entire text, claims, and accompanying figures.

### BRIEF DESCRIPTION OF THE DRAWINGS

FIG. 1A is a perspective cross-sectional view of a starter illustrating a turbine rotor and a casing.
FIG. 1B is an enlarged perspective cross-sectional view taken along plane B-B of FIG. 1A and shows spiral fins extending between an inner ring and an outer ring of the casing.
FIG. 2 is a simplified cross-sectional view of a concentrically arranged fin pattern of the casing.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope of the invention as defined by the claims. The figures may not be drawn to scale, and applications and embodiments of the present invention may include features and components not specifically shown in the drawings.

### DETAILED DESCRIPTION

Existing debris containment methods utilized in a turbine casing for turbine engine starters incorporate a carved out hollow area with ridges that requires a multi-piece assembly involving costly (and heavy) brazing, welding, and re-machining. Proposed herein is a casing formed by layer-by-layer additive manufacturing that includes built-in spiral fins extending between the inner wall and the outer wall of the casing so as to provide resilient ballistic functionality, weight reduction, and manufacturing simplicity of the casing.

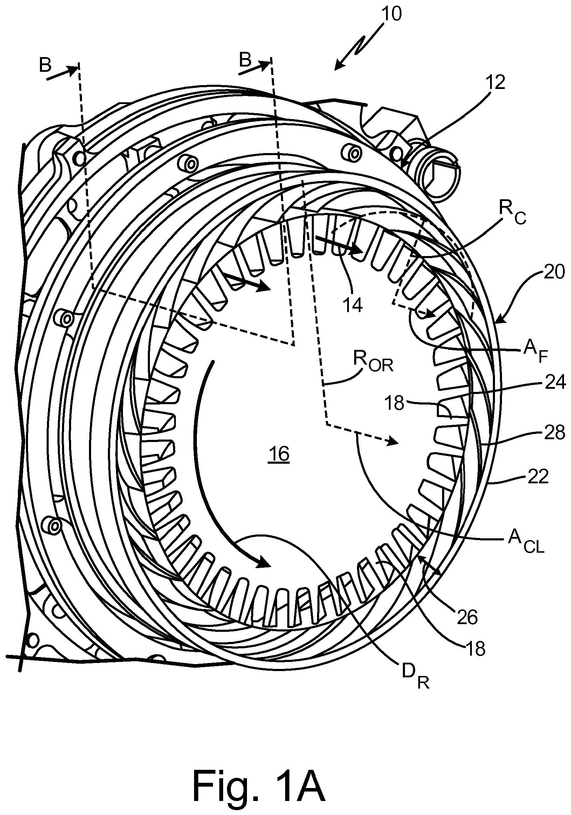

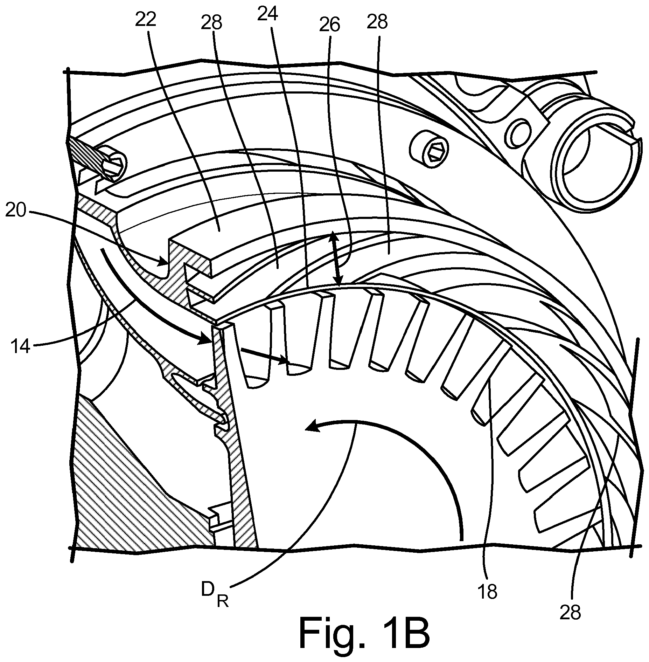

FIG. 1A is a perspective cross-sectional view of starter 10 and shows turbine containment arrangement 12, flowpath 14, turbine rotor 16 including centerline axis A_{CL} and direction of rotation D_{R}, blades 18, casing 20 (with outer ring 22 including radius R_{OR}, inner ring 24, annular gap 26, and fins 28 each with fin axis A_{F} and curvature radius Rc). FIG. 1B is an enlarged perspective cross-sectional view illustrating a section of turbine containment arrangement 12 along plane B-B of FIG. 1A, and shows fins 28 extending between inner ring 24 and outer ring 22 of casing 20. FIGS. 1A and 1B are discussed in tandem.

Starter 10 is a starter unit for a turbine engine. Turbine containment arrangement 12 includes turbine rotor 16 with blades 18 and casing 20 with outer ring 22, inner ring 24, and fins 28. Flowpath 14 is a flow path of air passing through turbine containment arrangement 12. Turbine rotor 16 is a hub or disk that includes blades 18 and is configured to rotate about centerline axis A_{CL}. Centerline axis A_{CL} is an axis extending through a centerpoint of turbine rotor 16. Direction of rotation D_{R} is a direction of rotation of turbine rotor 16. Blades 18 are airfoils.

Casing 20 includes outer ring 22, inner rings 24, and fins 28. Outer ring 22 and inner ring 24 are annular bands of solid material (e.g., metallic material). Radius R_{OR} is a radius of outer ring 22. Annular gap 26 is an annular shaped space. In this example, fins 28 are curved ribbons of solid material. In other examples, fins 28 can be flat planar pieces of solid material. Fin axis A_{F} is an axis about which a single fin 28 is rotated about to form its curvature. For example, each fin of fins 28 has its own respective fin axis A_{F}. Curvature radius R_{C} is a radius of curvature of one fin of the fins 28.

In this non-limiting embodiment, starter 10 is connected to an engine of an aircraft via a gear train with a drive shaft. Turbine containment arrangement 12 is mounted within a portion of starter 10. Flowpath 14 passes through a portion of starter 10 and flows across blades 18 of turbine rotor 16. Turbine rotor 16 is disposed within and rotates relative to inner ring 24 of casing 20. Centerline axis A_{CL} extends perpendicular to a radial direction of turbine rotor 16. Direction of rotation D_{R} is shown as counter-clockwise in this example. Blades 18 are connected to and extend radially outward from a center disk of turbine rotor 16. Blades 18 are disposed in casing 20 such that flowpath 14 flows across blades 18.

Casing 20 is disposed about and extends around turbine rotor 16. Outer ring 22 and inner ring 24 are connected to fins 28. In some embodiments, casing 20 can be built/formed with layer-by-layer additive manufacturing such that outer ring 22, inner ring 24, and fins 28 are integrally formed together as a single piece of material (e.g., monolithic) with a layer-by-layer additive manufacturing process. In one non-limiting embodiment, a selective laser sintering process is used to form casing 20. In other examples, casing 20 with outer ring 22, inner ring 24, and fins 28 can be formed with titanium, an alloy of nickel containing chromium and iron, or other metals including superalloys with resistance to high temperatures. Annular gap 26 extends between outer ring 22 and inner ring 24 in a radial direction relative to turbine rotor 16.

Each fin 28 is connected to and extends between outer ring 22 and inner ring 24. In this non-limiting embodiment, each fin of fins 28 is curved in a direction that is opposite to direction of rotation D_{R} of turbine rotor 16. For example, each fin of fins 28 is shown to include a curved shape that includes both a radially outward component and a tangential component that is opposite to direction of rotation D_{R} of turbine rotor 16 such that each fin is concave inwards towards an inside of turbine rotor 16. In another non-limiting embodiment, fins 28 can be oriented in different manners.

In the illustrated embodiment, fins 28 are shown as including a single set of fins 28 that are all rotated in the same direction and are uniformly spaced. In other non-limiting embodiments, there can be multiple sets of fins 28 defined by differing amounts of curvature as well as frequency. In other non-limiting embodiments, however, there can be more than one set of fins 28, such that separate sets of fins can be oppositely oriented from another with regards to curvature. For example, a second set of fins 28 could be situated in casing 20 such that the curvature of the second set of fins ran in an opposite direction to fins 28 shown in FIGS. 1A and 1B, and such that the second set of fins 28 crossed-over/intersected with fins 28 shown in FIGS. 1A and 1B creating a matrix or grid of intersecting curved fins 28.

In this example, curvature radius R_{C} of fins 28 is less than radius R_{OR} of outer ring 22. In this non-limiting embodiment, the spaces between adjacent fins 28 are occupied with air at standard temperature and pressure (e.g., ambient). In another non-limiting embodiment, the spaces between fins 28 can be occupied in whole or in part by a high-temperature, soft spongy material such as plastic, rubber, and/or metallic foam. In this example, fin axis A_{F} is offset from and parallel to centerline axis A_{CL} of turbine rotor 16.

Turbine containment arrangement 12 of starter 10 functions to spool up the aircraft engine by blowing air with flowpath 14 across blades 18 to rotate turbine rotor 16 that drives a gear train that eventually drives the engine. For example, as the air from flowpath 14 flows across blades 18, the airfoil shape of blades 18 creates a pressure differential causing turbine rotor 16 to rotate about centerline axis A_{CL}. Casing 20 houses rotor turbine 16 and contains the air of flow path 14. Outer ring 22 provides an exterior layer of casing 20 that prevents particles from exiting out of casing 20. Outer ring 22 also acts to stop any particles that come into contact with outer ring 22 from the inside of outer ring 22 thereby preventing the particles from exiting casing 20. Inner ring 24 provides containment of flow path 14 through casing 20. Inner ring 24 also acts to reduce the kinetic energy (e.g., speed) of any particles that puncture through inner ring 24. Annular gap 26 provides spacing between inner ring 24 and outer ring 22, and allows for multiple fins 28 to slow down particles that puncture through inner ring 24.

In the event of a particle puncturing through inner ring 24 and entering gap 26, the particle comes into contact with fins 28. As the particle comes into contact with one of fins 28, the fin 28 absorbs a portion of the kinetic energy of the particle to reduce the velocity of the particle. Additionally, the layered configuration of fins 28 allows for a particle moving through gap 26 to come into contact with multiple fins 28 that sequentially reduce the kinetic energy of the particle. Also, the amount of curvature and angle between each of fins 28 and inner ring 24 deflect such a particle in tangential and radially inward component vectors, which encourages entrapment of the particle within outer ring 22. For example, as a particle punctures through inner ring 24 and enters gap 26, the particle is likely to have a tangential component velocity perpendicular to a radial direction of turbine rotor 16. The angled/curved configuration of fins 28 counteracts this tangential component by situating the surfaces of fins 28 to be closer to perpendicular to such a tangential vector of the particle's motion. Also in this way, the particle will come into contact with multiple of fins 28 as the particle punctures through successive fins 28.

In some embodiments contemplated in view of the present disclosure, fin axis A_{F} and/or curvature radius R_{C} can be moved and/or adjusted (e.g., reduced or increased) to provide different configurations, locations, and curvature amounts for fins 28.

By way of utilizing layer-by-layer additive manufacturing, relatively thin fins 28 can be formed to create armor and cushions to absorb kinetic energy of particles that puncture through inner ring 24. Due to forming casing with additive manufacturing, flow path 14 is uninterrupted throughout turbine containment arrangement 12 and the manufacturing process does not require any additional pieces, assembly, or re-machining. The spiral configuration of fins 28 allows for multiple barriers for particles to pass through while reducing the overall weight of the housing due to the relatively small thickness of fins 28.

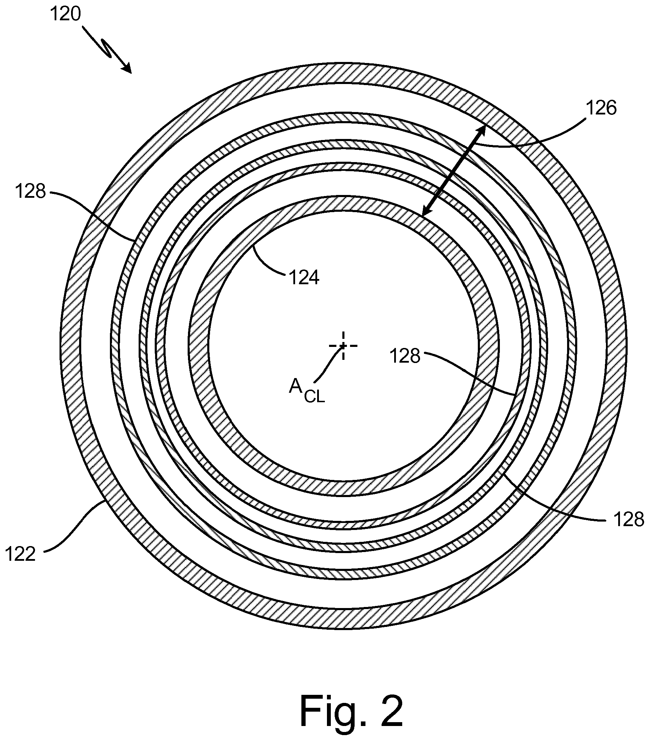

FIG. 2 is a simplified view of a concentrically arranged fin pattern of casing 120 and shows outer ring 122, inner ring 124, annular gap 126, plurality of fins 128, Fin axis AF, and centerline axis A_{CL}. FIG. 2 is shown without a turbine rotor for clarity.

Casing 120 includes outer ring 122, inner rings 124, and fins 128. Here, centerline axis A_{CL} is shown as an axis extending through an axial centerpoint of casing 120. Outer ring 122 and inner ring 124 are annular bands of solid material (e.g., metallic material). Annular gap 126 is a space extending between outer gap 122 and inner gap 124. In this example, fins 128 are circular or ring-shaped ribbons of solid material. Fin axis A_{F} is an axis about which each of fins 128 is centered.

In FIG. 2, fins 128 are shown as concentric circles and such that fin axis A_{F} of each of fins 128 is coaxial with centerline axis A_{CL} of casing 120. Here, FIG. 2 presents an alternate embodiment of additively manufactured casing 120 with fins 128 monolithically formed to outer ring 122 and inner ring 124 and such that fins 128 absorb the kinetic energy of any particles that puncture through inner ring 124 and enter into gap 126. For example, fins 128 in the form of concentric circles provides another example of fins with a radius of curvature less than a radius of curvature of outer ring 122. In other non-limiting embodiments, the spaces between fins 128 can be occupied in whole or in part by a high-temperature, soft spongy material such as plastic, rubber, and/or metallic foam.

The concentric arrangement of fins 128 causes particles entering into gap 126 to come into contact with fins 128 and be deflected in a tangential direction. If the particle punctures through one or more of fins 128, each consecutive fins 128 would further absorb kinetic energy from the particle and deflect the particle further in a tangential direction. The quantity of fins 128 and sizes can be varied depending on the weight requirements of casing 120. In another non-limiting embodiment, fins 28 and fins 128 can both be combined to form a mixed set of fins including both spiral and circular configurations.

### Discussion of Possible Embodiments

A turbine containment arrangement includes a turbine rotor rotatable about a turbine axis and a casing. The casing extends radially outward of the turbine rotor and includes an outer ring, an inner ring, and a plurality of fins. The inner ring is disposed radially inward from and co-axially with the outer ring and the turbine axis. The outer ring and the inner ring form an annular gap extending therebetween. The plurality of fins is disposed between the outer ring and the inner ring and extends at least partially circumferentially and radially therebetween. The plurality of fins is monolithically formed with the inner and outer rings. Each of the plurality of fins spirals outward in a direction that is opposite to a direction of rotation of the turbine wheel.

The arrangement of the preceding paragraph can optionally include, additionally and/or alternatively, any one or more of the following features, configurations and/or additional components.

Each of the plurality of fins can extend from the inner ring to the outer ring.

Each of the plurality of fins can be curved about a respective fin axis that can be offset from and/or parallel to the axis of the turbine rotor.

The outer ring can include a first radius, wherein each of the plurality of fins can comprise a radius of curvature that can be less than the first radius.

Each of the plurality of fins can include a circular shape and/or can be coaxial with the axis of the turbine rotor.

A method of forming a casing for a turbine containment arrangement includes building the casing with a layer-by-layer additive manufacturing process. The casing includes an outer ring, an inner ring, and a plurality of fins. The inner ring is disposed radially inward from and co-axially with the outer ring. The outer ring and the inner ring form an annular gap extending therebetween. The plurality of fins is disposed between the outer ring and the inner ring and extends at least partially circumferentially and radially therebetween. The outer ring, the inner ring, and the fins are integrally formed together as a single piece of material with a layer-by-layer additive manufacturing process. Each of the plurality of fins spirals outward in a direction that is opposite to a direction of rotation of the turbine wheel.

The method of the preceding paragraph can optionally include, additionally and/or alternatively, any one or more of the following steps, features, configurations and/or additional components.

The layer-by-layer additive manufacturing process can comprise a selective laser sintering process.

Each of the plurality of fins can be curved about a respective fin axis that can be offset from and/or parallel to the axis of the turbine rotor.

While the invention has been described with reference to an exemplary embodiment(s), it will be understood by those skilled in the art that various changes may be made and equivalents may be substituted for elements thereof without departing from the scope of the invention defined by the claims. In addition, many modifications may be made to adapt a particular situation or material to the teachings of the invention without departing from the scope of the invention. Therefore, it is intended that the invention not be limited to the particular embodiment(s) disclosed, but that the invention will include all embodiments falling within the scope of the appended claims.

## Claims

1. A turbine containment arrangement comprising:
a turbine rotor (16) rotatable about a turbine axis; and
a casing (20) extending radially outward of the turbine rotor and comprising:
an outer ring (22);
an inner ring (24) disposed radially inward from and co-axially with the outer ring and the turbine axis, wherein the outer ring and the inner ring form an annular gap (26) extending therebetween; and
a plurality of fins (28) disposed between the outer ring and the inner ring and extending at least partially circumferentially and radially therebetween, wherein the plurality of fins is monolithically formed with the inner and outer rings; and **characterised in that**:
each of the plurality of fins (28) spirals outward in a direction that is opposite to a direction of rotation of the turbine wheel.

2. The turbine containment arrangement of claim 1, wherein each of the plurality of fins extends from the inner ring to the outer ring.

3. The turbine containment arrangement of claim 1 or 2, wherein each of the plurality of fins is curved about a respective fin axis (A_{F}) that is offset from and parallel to the axis of the turbine rotor.

4. The turbine containment arrangement of claim 1, 2 or 3, wherein the outer ring includes a first radius, wherein each of the plurality of fins comprises a radius of curvature that is less than the first radius.

5. The turbine containment arrangement of any of claims 1 to 4, wherein each of the plurality of fins includes a circular shape and is coaxial with the axis of the turbine rotor.

6. A method of forming a casing for a turbine containment arrangement, the method comprising:
building the casing with a layer-by-layer additive manufacturing process, wherein the casing comprises:
an outer ring;
an inner ring disposed radially inward from and co-axially with the outer ring, wherein the outer ring and the inner ring form an annular gap extending therebetween; and
a plurality of fins disposed between the outer ring and the inner ring and extending at least partially circumferentially and radially therebetween, wherein the outer ring, the inner ring, and the fins are integrally formed together as a single piece of material with a layer-by-layer additive manufacturing process; and **characterised in that**:
each of the plurality of fins (28) spirals outward in a direction that is opposite to a direction of rotation of the turbine wheel.

7. The method of claim 6, wherein the layer-by-layer additive manufacturing process comprises a selective laser sintering process.

8. The method of claim 6 or 7, wherein each of the plurality of fins is curved about a respective fin axis that is offset from and parallel to the axis of the turbine rotor.

## Patentansprüche

1. Turbinenberstschutzanordnung, umfassend:
einen Turbinenrotor (16), der um eine Turbinenachse drehbar ist; und
ein Gehäuse (20), das sich von dem Turbinenrotor radial nach außen erstreckt und Folgendes umfasst:
einen äußeren Ring (22);
einen inneren Ring (24), der radial innen von und koaxial mit dem äußeren Ring und der Turbinenachse angeordnet ist, wobei der äußere Ring und der innere Ring einen Ringspalt (26) bilden, der sich dazwischen erstreckt; und
eine Vielzahl von Rippen (28), die zwischen dem äußeren Ring und dem inneren Ring angeordnet ist und sich zumindest teilweise umlaufend und radial dazwischen erstreckt, wobei die Vielzahl von Rippen mit dem inneren und äußeren Ring monolithisch ausgebildet ist; und **dadurch gekennzeichnet, dass**:
jede der Vielzahl von Rippen (28) in einer Richtung, die einer Drehrichtung des Turbinenrads entgegengesetzt ist, spiralförmig nach außen verläuft.

2. Turbinenberstschutzanordnung nach Anspruch 1, wobei sich jede der Vielzahl von Rippen von dem inneren Ring zum äußeren Ring erstreckt.

3. Turbinenberstschutzanordnung nach Anspruch 1 oder 2, wobei jede der Vielzahl von Rippen um eine jeweilige Rippenachse (A_{F}) gekrümmt ist, die von der Achse des Turbinenrotors versetzt und parallel dazu ist.

4. Turbinenberstschutzanordnung nach Anspruch 1, 2 oder 3, wobei der äußere Ring einen ersten Radius einschließt, wobei jede der Vielzahl von Rippen einen Krümmungsradius umfasst, der kleiner als der erste Radius ist.

5. Turbinenberstschutzanordnung nach einem der Ansprüche 1 bis 4, wobei jede der Vielzahl von Rippen eine Kreisform einschließt und zu der Achse des Turbinenrotors koaxial ist.

6. Verfahren zum Bilden eines Gehäuses für eine Turbinenberstschutzanordnung, wobei das Verfahren Folgendes umfasst:
Aufbauen des Gehäuses mit einem schichtweisen additiven Fertigungsprozess, wobei das Gehäuse Folgendes umfasst:
einen äußeren Ring;
einen inneren Ring, der radial innen von und koaxial mit dem äußeren Ring angeordnet ist, wobei der äußere Ring und der innere Ring einen Ringspalt bilden, der sich dazwischen erstreckt; und
eine Vielzahl von Rippen, die zwischen dem äußeren Ring und dem inneren Ring angeordnet ist und sich zumindest teilweise umlaufend und radial dazwischen erstreckt, wobei der äußere Ring, der innere Ring und die Rippen zusammen als einziges Materialstück mit einem schichtweisen additiven Fertigungsprozess einstückig ausgebildet sind; und **dadurch gekennzeichnet, dass**:
jede der Vielzahl von Rippen (28) in einer Richtung, die einer Drehrichtung des Turbinenrads entgegengesetzt ist, spiralförmig nach außen verläuft.

7. Verfahren nach Anspruch 6, wobei der schichtweise additive Fertigungsprozess einen selektiven Lasersinterprozess umfasst.

8. Verfahren nach Anspruch 6 oder 7, wobei jede der Vielzahl von Rippen um eine jeweilige Rippenachse gekrümmt ist, die von der Achse des Turbinenrotors versetzt und parallel dazu ist.

## Revendications

1. Agencement de confinement de turbine comprenant :
un rotor de turbine (16) pouvant tourner autour d'un axe de turbine ; et
un carter (20) s'étendant radialement vers l'extérieur du rotor de turbine et comprenant :
une bague extérieure (22) ;
une bague intérieure (24) disposée radialement vers l'intérieur depuis et coaxialement à la bague extérieure et l'axe de turbine, dans lequel la bague extérieure et la bague intérieure forment un espace annulaire (26) s'étendant entre elles ; et
une pluralité d'ailettes (28) disposées entre la bague extérieure et la bague intérieure et s'étendant au moins partiellement circonférentiellement et radialement entre elles, dans lequel la pluralité d'ailettes sont formées de manière monolithique avec les bagues intérieure et extérieure ; et **caractérisé en ce que** :
chacune de la pluralité d'ailettes (28) s'enroule vers l'extérieur dans une direction qui est opposée à une direction de rotation de la roue de turbine.

2. Agencement de confinement de turbine selon la revendication 1, dans lequel chacune de la pluralité d'ailettes s'étend de la bague intérieure à la bague extérieure.

3. Agencement de confinement de turbine selon la revendication 1 ou 2, dans lequel chacune de la pluralité d'ailettes est incurvée autour d'un axe d'ailette respectif (A_{F}) qui est décalé par rapport à l'axe du rotor de turbine et parallèle à celui-ci.

4. Agencement de confinement de turbine selon la revendication 1, 2 ou 3, dans lequel la bague extérieure comporte un premier rayon, dans lequel chacune de la pluralité d'ailettes comprend un rayon de courbure qui est inférieur au premier rayon.

5. Agencement de confinement de turbine selon l'une quelconque des revendications 1 à 4, dans lequel chacune de la pluralité d'ailettes comporte une forme circulaire et est coaxiale à l'axe du rotor de turbine.

6. Procédé de formation d'un carter pour un agencement de confinement de turbine, le procédé comprenant :
la construction du carter avec un procédé de fabrication additive couche par couche, dans lequel le carter comprend :
une bague extérieure ;
une bague intérieure disposée radialement vers l'intérieur depuis et coaxialement à la bague extérieure, dans lequel la bague extérieure et la bague intérieure forment un espace annulaire s'étendant entre elles ; et
une pluralité d'ailettes disposées entre la bague extérieure et la bague intérieure et s'étendant au moins partiellement circonférentiellement et radialement entre elles, dans lequel la bague extérieure, la bague intérieure et les ailettes sont formées d'un seul tenant ensemble en une seule pièce de matériau avec un procédé de fabrication additive couche par couche ; et **caractérisé en ce que** :
chacune de la pluralité d'ailettes (28) s'enroule vers l'extérieur dans une direction qui est opposée à une direction de rotation de la roue de turbine.

7. Procédé selon la revendication 6, dans lequel le procédé de fabrication additive couche par couche comprend un procédé de frittage laser sélectif.

8. Procédé selon la revendication 6 ou 7, dans lequel chacune de la pluralité d'ailettes est incurvée autour d'un axe d'ailette respectif qui est décalé par rapport à l'axe du rotor de turbine et parallèle à celui-ci.
